Europäisches Patentamt

European Patent Office

Office européen des brevets

(11) Publication number: **0 234 369**
**B1**

# EUROPEAN PATENT SPECIFICATION

(45) Date of publication of the patent specification:
18.07.90

(51) Int. Cl.⁵: **G02B 6/34**

(21) Application number: 87101668.9

(22) Date of filing: 06.02.87

(54) **Optical branching filter.**

(30) Priority: 06.02.86 JP 25151/86

(43) Date of publication of application:
02.09.87 Bulletin 87/36

(45) Publication of the grant of the patent:
18.07.90 Bulletin 90/29

(84) Designated Contracting States:
DE FR GB IT

(56) References cited:
EP-A- 0 068 198
EP-A- 0 146 957

PATENT ABSTRACTS OF JAPAN, vol. 7,
no. 270 (P-240)[1415], 2nd December 1983; &
JP-A-58 149 018 (NIPPON DENSHIN DENWA
KOSHA) 05-09-1983
PATENT ABSTRACTS OF JAPAN, vol. 5,
no. 154 (P-82)[826], 29th September 1981; &
JP-A-56 85 701 (FUJITSU K.K.) 13-07-1981
PATENT ABSTRACTS OF JAPAN, vol. 6,
no. 162 (P-137)[1040], 25th August 1982; &
JP-A-57 81 227 (FUJITSU K.K.) 21-05-1982

The file contains technical information submitted after
the application was filed and not included in this
specification

(73) Proprietor: FUJITSU LIMITED, 1015, Kamikodanaka
Nakahara-ku, Kawasaki-shi Kanagawa 211(JP)

(72) Inventor: Isono, Hideki, A-102, 151, Mizonokuchi
Takatsu-ku, Kawasaki-shi Kanagawa 213(JP)
Inventor: Asanuma, Kazushi, C-108, 371,
Higashiyokomachi, Suzaka-shi Nagano, 382(JP)
Inventor: Yokota, Takashi, 2-15-23, Chuorinkan,
Yamato-shi Kanagawa 242(JP)
Inventor: Terai, Kiyoshi, 3-13-1, Matsugaya, Taito-ku
Tokyo 111(JP)

(74) Representative: Lehn, Werner, Dipl.-Ing. et al, Hoffmann,
Eitle & Partner Patentanwälte Arabellastrasse 4,
D-8000 München 81(DE)

## Description

### Background of the Invention

The present invention relates to an optical branching filter which mixes or branches the lights in different wavelengths.

An optical branching filter is a basic device for a wavelength division multiplexing optical communication system. For example, it is possible by using n mixed wave lengths of light $\lambda_1$, $\lambda_2$, ...., $\lambda_n$ to transmit n times the amount of information as by using the light of single wavelength $\lambda_0$ over a single line of optical fiber. And n-channel bothway simultaneous optical communication can be realized by allocating light of different wavelengths for transmission and reception, namely the wavelengths $\lambda_1$, $\lambda_3$, ...., $\lambda_{2n-1}$ are allocated for transmission and wavelengths $\lambda_2, \lambda_4$, ....., $\lambda_{2n}$ are allocated for reception. In order to realize such optical communication systems, an optical mixing filter which mixes the lights in different wavelengths and inputs the light to a single line of optical fiber is arranged at the sending side and an optical branching filter which branches respective lights in different wavelengths from the light mixed different wavelengths is arranged at the receiving side.

The optical mixing filter and optical branching filter currently put into practical use generally mix and branch the lights by employing a dielectric material filter composed of the thin dielectric multilayer film laminated in a plurality of layers such as $SiO_2$ and $TiO_2$ as a bandpass filter which allows transmission of the light having particular wavelength but reflects the lights having other wavelengths.

The optical mixing filter can also be used as the optical branching filter by inverting the incoming and outgoing directions of light to/from said dielectric material filter. These mixing and branching filters have the same structure and therefore these filters are both called the optical branching filters. To realize this optical branching filter, there are further required various optical components in addition to said dielectric material filters. For example, these are a plurality of optical lenses which cause the light sent from the optical fiber to effectively be input to each dielectric material filter and also causes the light which has passed trough the dielectric material filter to be effectively input to the optical fiber; and a plurality of fixing mechanisms which fix the end face of optical fiber to the focus point of lenses.

However, the optical branching filter deals with light having various wavelengths. A refractive index of lens generally changes in accordance with wavelength and thereby the focal point of the lens depends on the wavelength of the incident light.

Therefore, since said fixing mechanisms require adjustment at the focal points for each wavelength, it deteriorates the manufacturing yield of the optical branching filter. This deterioration becomes distinctive with increasing number of wavelengths of lights to be mixed or branched. Particularly, various kinds of semiconductor lasers or light emitting diodes for long to short wavelengths have been developed and the number of wavelengths dealt with by an optical branching filter tends to increase and therefore the problem of adjustment at focal points is considered very serious.

It is accordingly an object of the present invention to provide an optical branching filter which is capable of improving manufacturing yield by realizing common adjustment of the distance between the lens and the end face of the optical fiber without depending on wavelengths.

According to the present invention, an optical branching filter for branching or mixing "n" wavelengths of light is provided, comprising:

a block which is optically transparent and has two parallel surfaces, a first input/output component transmitting the "n" mixed wavelengths of light provided on one of said two surfaces;

second input/output components provided on any one of said two surfaces forming optical filters, each respectively allowing lights of a different predetermined wavelength to pass therethrough, and respectively reflecting the other wavelengths, and a first input/output port and "n" second input/output ports each being respectively formed by an optical waveguide and having an associated lens which optically connects each optical waveguide and its corresponding first input/output component or second input/output component, characterized in that

each lens is spaced from its corresponding input/output component and also from its corresponding optical waveguide such that there is an identical distance between each lens and its corresponding optical waveguide; and that the positions of each input/output port are such that the optical path length formed between the lens of said first input/output port and the associated lens of each second input/outut port is in reverse proportion to the predetermined wavelengths associated with the corresponding second input/output component.

### Brief Description of the Drawings

Figs. 1(a), (b) are schematic plan views of an optical branching filter of the present invention;

Fig. 2 is a pictorial presentation for explaining the distance between lenses and distance between lens and optical fiber end face;

Fig. 3 is a sectional view of the assembled fixing mechanism of optical fiber end face and lens;

Fig. 4(a) is a plan view of practical optical branching filter;

Fig. 4(b) is a perspective view of practical optical branching filter;

Fig. 5 is a pictorial presentation for explaining relation of the distance between lenses and distance between lens and optical fiber end face;

Fig. 6 is a pictorial presentation for explaining wavelength characteristics of dielectric material filters; and

Fig. 7 is also a pictorial presentation for explaining relation of distance between lens and optical fiber end face and loss increase.

Like elements are given the like reference numerals throughout the drawings.

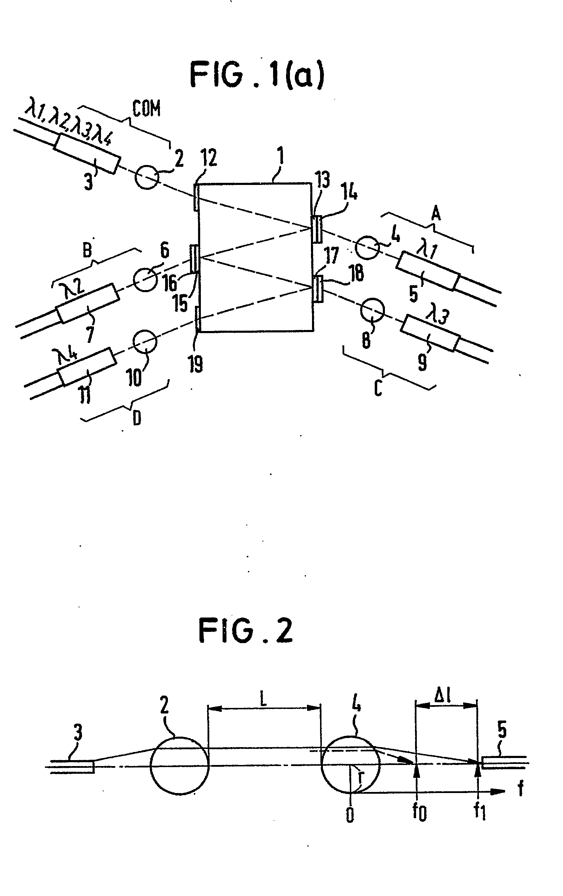

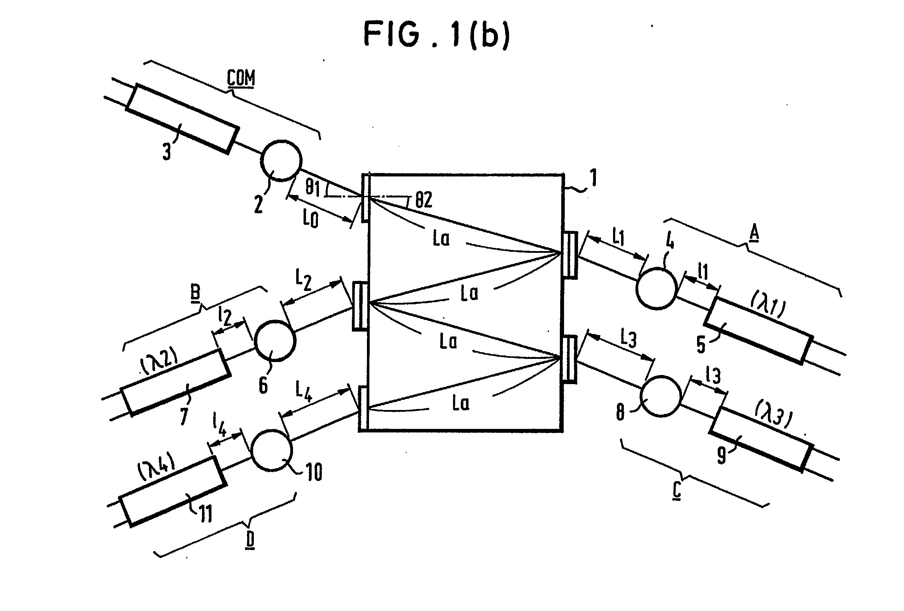

Figs. 1(a), (b) are schematic plan views illustrating a structure of optical branching filter of the present invention. In Figs. 1(a), (b), four kinds of different wavelengths $\lambda_1$, $\lambda_2$, $\lambda_3$, $\lambda_4$ are mixed and branched. In a glass block 1 consisting of an optically transparent substance such as BK7 (registered trade mark, Schott Glass Werke) having a pair of parallel surfaces, the parallel surfaces thereof are provided with a bandpass filter 13 which allows only the light of the wavelength $\lambda_1$ to pass, a bandpass filter 15 which allows only the light of wavelength $\lambda_2$ to pass and a bandpass filter 17 which allows only the light of wavelength $\lambda_3$ to pass. The light of four mixed wavelengths $\lambda_1$, $\lambda_2$, $\lambda_3$, $\lambda_4$ is emitted from the end face of optical fiber 3, converted to a parallel light by a spherical lens 2, and is input tot the glass block 1 through an anti-reflection film 12 provided for eliminating the reflected lights. In the case of branching this mixed light in to four wavelengths respectively, this mixed light is input from the end face of optical fiber 3. Among this mixed light, only the light of wavelength $\lambda_1$ is able to pass the bandpass-filter 13 provided to the opposite surface of glass block 1, is output to the outside of glass block 1 through the anti-reflection film 14, is focussed by spherical lens 4 and is then input to the optical fiber 5 effectively. The other light of wavelengths $\lambda_2$, $\lambda_3$, $\lambda_4$ is reflected. Moreover, only the light of wavelength $\lambda_2$ is able to pass the bandpass filter 15, is output to the outside of glass block 1 through the anti-reflection film 16, is focused by spherical lens 6 and is then input to the optical fiber 7. The lights of wavelengths $\lambda_3$, $\lambda_4$ is reflected. In the same way, the light in the wavelength $\lambda_3$ is able to pass the bandpass filter 17 and is then input to the optical fiber 9 by the spherical lens 8 through the anti-reflection film 18. Here, the light reflected by the bandpass filter 17 is only the light of wavelength $\lambda_4$ and therefore the light of the wavelength $\lambda_4$ is input to the optical fiber 11 by the spherical lens 10 via only the anti-reflection film 19.

The bandpass filters and anti-reflection films are formed by the dielectric material multilayer film of $SiO_2$, $TiO_2$ obtained by vacuum depositon.

In an example explained above, each wavelength of light is branched from the light of four mixed wavelengths. On the other hand, the light of four mixed wavelengths can be input to the optical fiber 3 by reversing the travelling direction of the light of wavelengths $\lambda_1$, $\lambda_2$, $\lambda_3$, $\lambda_4$ emitted from the optical fibers 5, 7, 9, 11.

Here, it will become a problem that the spherical lenses deal differently with the lights in the different wavelengths. Namely, a refractive index of lens changes in accordance with wavelength and therefore the focal point of spherical lenses 4, 6, 8, 10 are also different in the input/output ports A, B, C, D.

In order to have the lights of the wavelengths $\lambda_1$, $\lambda_2$, $\lambda_3$, $\lambda_4$ input most effectively to the optical fiber 5, 6, 9, 11, the end faces of optical fiber 5, 6, 9, 11 must be provided at the focal points of the spherical lenses 4, 6, 8, 10 at respective input/output ports.

Therefore, since the end faces of each optical fiber must be arranged at the focal point of each input/output port A, B, C, D, it is required to adjust the distances between the spherical lenses and optical fiber end faces, $\ell_1, \ell_2, \ell_3, \ell_4$ respectively.

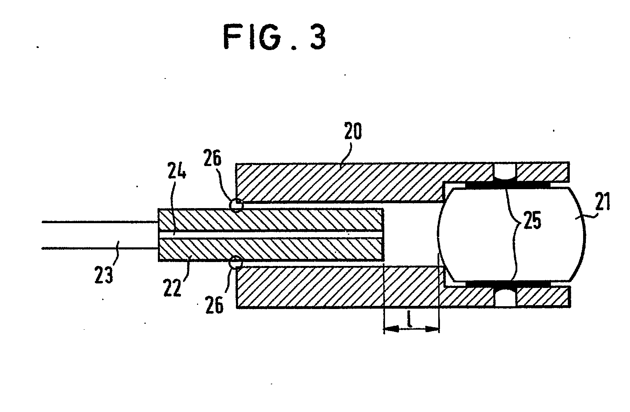

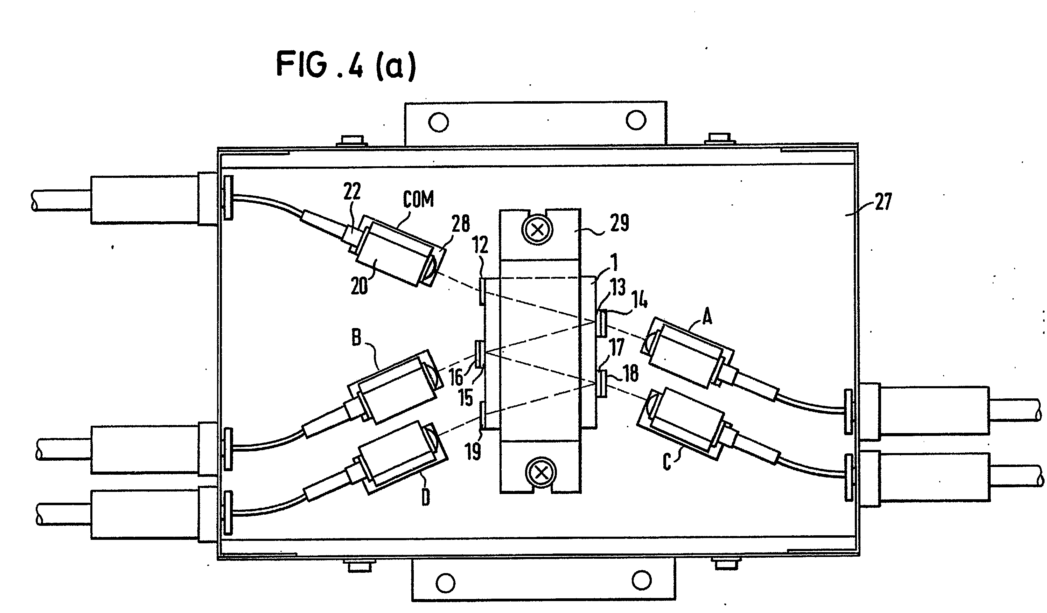

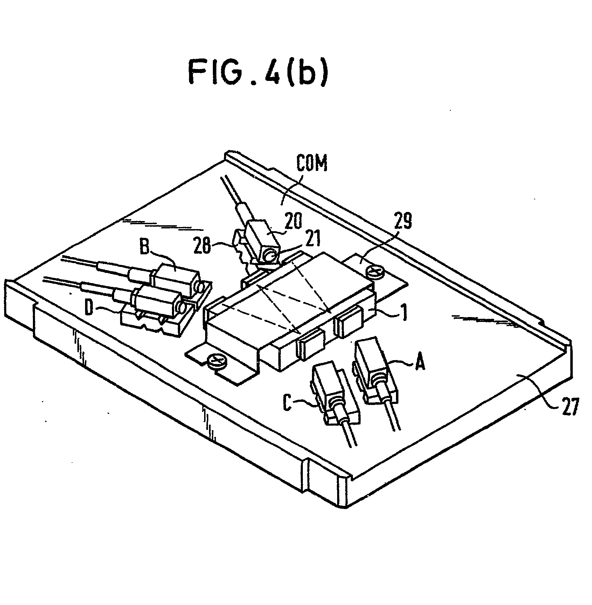

However, the input/output ports A, B, C, D and the mixing light input/output port COM (optical fiber 3 and spherical lens 2) are assembled as shown in Fig. 3. Fig. 3 is a sectional view of the structure of the assembly of spherical lens and optical fiber at the respective input/output ports A, B, C, D, COM. The end part of optical fiber cord 23, for examle, NYLON, is removed and the ferrule is formed by the optical fiber 24 (core and cladding) and the sleeve 22 to which said optical fiber 24 is inserted. An assembled holder 20 consisting of stainless steel provides a cylindrical hole for fixing such ferrules and a cylindrical hole for fixing a drum lens 21, which is fixed to the assembled holder 20 by the glass solder 25, in different diameters. Moreover the ferrule is fixed to the assembled holder 20 by laser welding of the part 26. The drum lens 21 is formed by grinding a spherical lens because of fixing it easier. The assembled input/output ports A, B, C, D, COM are fixed on to a substrate 27 via an oblique spacer 28 as shown in Figs. 4(a),(b). Moreover, the glass block 1 providing bandpass filters is fixed onto the substrate through a fixing member 29 by screwing. Here, the input/output ports A, B, C, D, COM are fixed through the oblique spacer 28 in order to make the optical match axis more easily.

However, as mentioned above, while it is possible to fix the optical components easily with good accuracy onto the substrate 27 such that the spherical lens and optical fiber, which form respective input/output ports, are assembled to be a unit, it is very troublesome to adjust the distances between the optical fiber end and lens, shown in Fig. 3, corresponding to respective input/output ports A, B, C, D, COM (corresponding to wavelength).

Accordingly, it is apparent that manufacturing yield can be very much improved by making the distances between optical fiber end and lens, $l_1$, $l_2$, $l_3$, $l_4$, equal without depending on wavelength.

A method for making the distances between optical fiber end and lens, $l_1$, $l_2$, $l_3$, $l_4$, equal will then be explained hereafter.

Fig. 1b is a pictorial representation for explaining the distance $L = L_0 + L_a + L_1$ between lenses in the input/output port COM and input/output port A in Fig. 1 and the distance $l = l_1$ between optical fiber end and lens at the input/output port A.

With reference to Fig. 2, when a focal point of lens 4 for the light of wavelength $\lambda_0$ is considered as $f_0$ when in the relation $\lambda_0$ $\lambda_1$, the focus point of lens 4 for the light of wavelength $\lambda_1$ becomes of $f_1$. Namely, since a refraction index decreases when wavelength becomes longer, the focus point of lens 4 shifts in such a direction as being far from lens 4.

An example of BK7 used as the lens 4 is further explained in detail.

The refractive index of BK7 is 1.5145 for the He-Ne laser beam in the wavelength $\lambda_0 = 0.63$ μm and

when the radius r of the spherical lens is 2.5 mm, the focal distance $f_0$ is 1.18 mm + 2.5 mm + 3.68 mm.

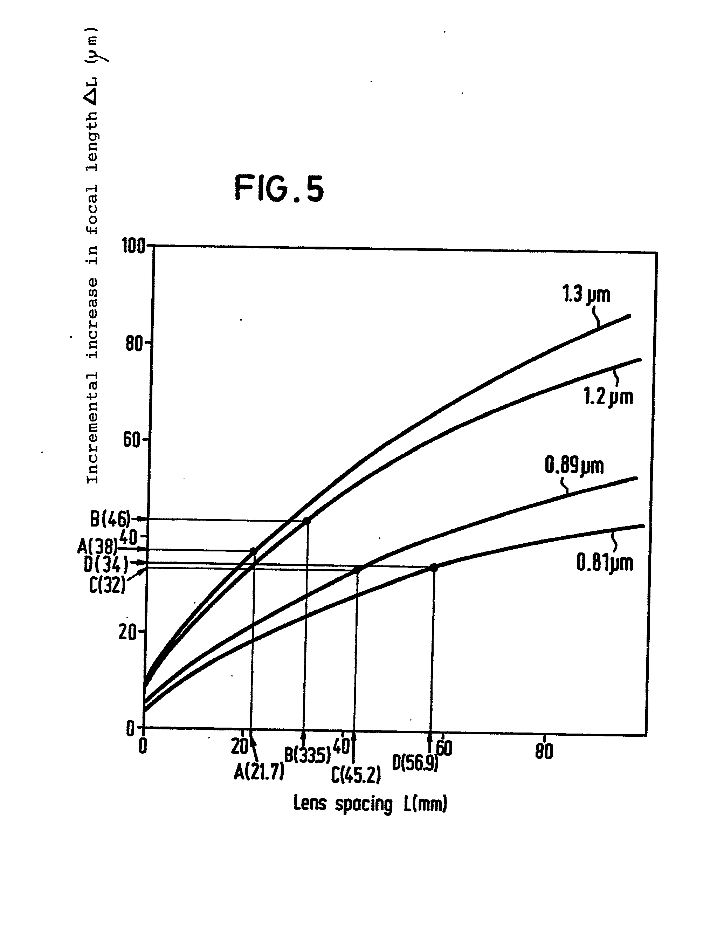

Fig. 5 shows relation between the lens-to-lens distance L and increment $\Delta l$ of focal distance for each wavelength $\lambda$ = 1.3 µm, 1.2 µm, 0.89 µm and 0.81 µm with reference to $f_0$ = 1.18 mm.

As is apparent from Fig. 5, when the lens-to-lens distance L increases, increment $\Delta l$ of focal distance also increases.

Moreover, it can also be understood an incremental incease in focal length is larger as the wavelength is longer. In the case where light emitted from the optical fiber end is converted to perfectly parallel light by the spherical lens 2, increment $\Delta l$ only depends on the wavelength without depending on the lens-to-lens distance L. However, the spherical lens 2 cannot perfectly convert the light to perfectly parallel light and converts it actually to light which is a little diverging. Accordingly, when the lens-to-lens distance L increases, increment $\Delta l$ also increases.

Further investigation will be made for Fig. 5. A longer wavelength generally results in a larger increment $\Delta l$. On the other hand, a shorter wavelength results in a shorter increment $\Delta l$. Therefore, when the lens-to-lens distance L of shorter wavelength is set larger and the lens-to-lens distance L of longer wavelength is set smaller, the difference between the distances $\ell_1, \ell_2, \ell_3, \ell_4$ can be smaller. Considering these points, difference of distance between lens and optical fiber end resulting from difference of wavelengths can be alleviated to such a degree as an aberration by setting the lens-to-lens distance in reverse proportion to the length of wavelength. More concretely by, the lens-to-lens distance between the lens 2 of the mixing light input/output port COM and the lenses 4, 6, 8, 10 of the input/output ports A,B,C,D of respective wavelengths can be set in such a manner that it is reversely proportional to wavelength by setting the wavelengths of the input/output ports A,B,C,D in such a manner as $\lambda_1 > \lambda_2 > \lambda_3 > \lambda_4$ in Fig. I.

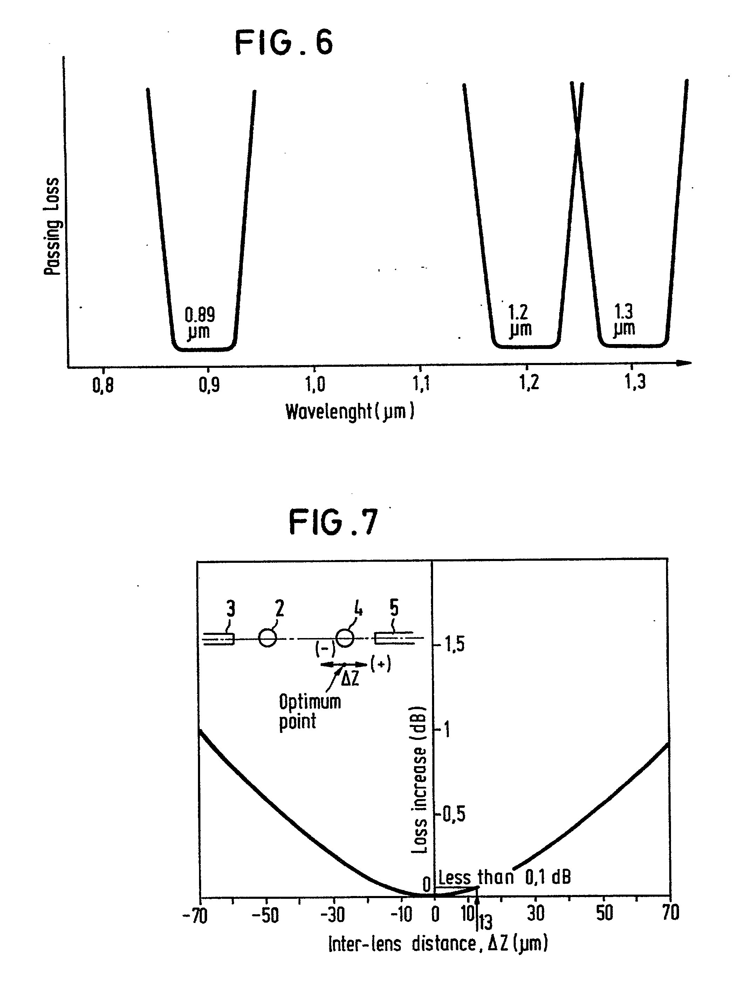

In the following explanation, practical values are given. The wavelengths are set as follow; $\lambda_1$ = 1.3 µm, $\lambda_2$ – 1.2 µm, $\lambda_3$ = 0.89 µm, $\lambda_4$ = 0.81 µm, and the wavelength characteristics of filters for each wavelength are set to that of bandpass filters shown in Fig. 6. A bandpass filter for the wavelength $\lambda_4$ is unnecessary. Un the case where incoming angle $\theta_1$ of the light at the input/output port COM is set to 23°, refracted angle $\theta_2$ to 15°, refractive index n for the reference light of glass block 1 (He-Ne laser beam wavelength = 0.63 µm) to 1.5154, distance between the lens and glass block at each input/output port COM, A, B, C, D to $L_0 = L_1 = L_2 = L_3 = L_4$ = 5 mm, the distance between the lens 2 of the input/output port COM and the lens of input/output port A is expressed as follows;

$$L_0 + L_1 + L_a \times 1/(\cos 15°) \times (1/n) = 21.7 \text{ mm}$$

In the same way, distance between the lens 2 of the input/output port COM and the lens 6 of input/output port B is expressed as follow;

$$L_0 + L_2 + L_a \times 2 \times 1/(\cos 15°) \times (1/n) \doteqdot 33.5 \text{ mm}$$

Concerning the input/output port C,

$$L_0 + L_3 + L_a \times 3 \times 1/(\cos 15°) \times (1/n) \doteqdot 45.2 \text{ mm}$$

Concerning the input/output port D,

$$L_0 + L_4 + L_a \times 4 \times 1/(\cos 15°) \times (1/n) \doteqdot 56.9 \text{ mm}$$

Where $1/\cos 15°$ is used for converting $L_a$ to the distance in the air.

In this case, deviation $\Delta l$ of focal distance at each input/output port can be obtained from Fig. 5 as follow:

Input/output port A; $\Delta l$ = 38 µm
Input/output port B; $\Delta l$ = 46 µm
Input/output port C; $\Delta l$ = 32 µm
Input/output port D; $\Delta l$ = 34 µm

Therefore, since the difference in distance between the focal distance $f_0$ and the radius of the spherical lens for the reference light is I.18 mm, the optimum distances $\ell_1, \ell_2, \ell_3, \ell_4$ between the optical fiber end and lens at each input/output port A, B, C, D are indicated as follow;

At the input/output port A, $\ell_1$ = I.18 + 0.038 (mm)
At the input/output port B, $\ell_2$ = I.18 + 0.046 (mm)
At the input/output port C, $\ell_3$ = I.18 + 0.032 (mm)
At the input/output port D, $\ell_4$ = I.18 + 0.034 (mm)

A mean value of the maximum and minimum values for all input/output ports can be obtained as follow:

$$(0.046 + 0.032)/2 = 0.040$$

Therefore, in case a common deviation $\Delta l$ at each input/output port is set to 0.040, following can be obtained.

$$l = \ell_1 = \ell_2 = \ell_3 = \ell_4 = I.18 + 0.04 = I.22 \text{ mm}.$$

Namely, a common value = I.22 mm can be obtained as the distance between the optical fiber end and lens.

Fig. 7 is a graph which indicates loss increase by deviation $\Delta z$ from the optimum position of lens at an input/output port, corresponding to Fig. 2. As is obvious from Fig. 7, loss is 0.1 dB or less when $\Delta z$ < I3 µm.

Therefore, in case $\Delta z$ < I3 µm, influence of loss is as small as can be neglected.

As explained above, when $\Delta l$ is set to 40 µm, the maximum $\Delta z$ for respective input/output ports A, B, C, D is equal to 40 - 32 = 8 µm < I3 µm.

Accordingly, distance between the optical fiber end and lens at each input/output port can be set in common.

If $\Delta l$ cannot be determined as small as an aberration, the lens-to-lens distance $\ell_1, \ell_2, \ell_3, \ell_4$ between the input/output ports can be changed by adjusting $L_0, L_1, L_2, L_3, L_4$ of input/output ports A, B, C, D, COM, in view of the relation between L and $\Delta l$.

**Claims**

1. An optical branching filter for branching or mixing "n" wavelengths of light, comprising:
a block (1) which is optically transparent and has two parallel surfaces, a first input/output component (12) transmitting the "n" mixed wavelengths of light provided on one of said two surfaces;
second input/output components (13, 14, 15, 16, 17, 18, 19) provided on any one of said two surfaces forming optical filters, each respectively allowing light of a different predetermined wavelength to pass therethrough, and respectively reflecting the other wavelengths, and a first input/output port (COM) and "n" second input/output ports (A, B, C, D), each being respectively formed by an optical waveguide (3, 5, 7, 9, 11) and having an associated lens (2, 4, 6, 8, 10) which optically connects each optical waveguide (3, 5, 7, 9, 11) and its corresponding first input/output component (12) or second input/output component (13, 14, 15, 16, 17, 18, 19), characterized in that

each lens (2, 4, 6, 8, 10) is spaced from its corresponding input/output component (13, 14, 15, 16, 17, 18, 19) and also from its corresponding optical waveguide (3, 5, 7, 9, 11) such that there is an identical distance between each lens and its corresponding optical waveguide; and that the positions of each input/output port (A, B, C, D) are such that the optical path length formed between the lens (2) of said first input/output port (COM) and the associated lens (4, 6, 8, 10) of each second input/output port (A. B, C, D) is in reverse proportion to the predetermined wavelengths associated with the corresponding second input/output component.

2. An optical branching filter according to claim 1, wherein distances between said optical waveguides (5, 7, 9, 11) and said lenses (2, 4, 6, 8, 10) are unified to a mean value of the maximum and minimum values among the optimum values of respective second input/output ports (A, B, C, D).

3. An optical branching filter according to claim 1, wherein said first and second input/output port (COM, A, B, C, D) comprises a cylindrical holder (20) which holds unitarily said optical waveguide (23, 24) and said lens (21) therein.

4. An optical branching filter according to claim 2, wherein said optical paths can be changed by adjusting the corresponding distance between each input/output port (COM, A, B, C, D) and said block (1), whereby said mean value can be set to the desired value.

**Revendications**

1. Filtre optique de dérivation destiné à séparer ou mélanger des lumières à "n" longueurs d'onde, comprenant:

un bloc (1) qui est optiquement transparent et qui a deux surfaces parallèles,

un premier composant d'entrée-sortie (12) qui transmet le mélange des lumières aux "n" longueurs d'onde, parvenant à l'une des deux surfaces,

des seconds composants d'entrée-sortie (13, 14, 15, 16, 17, 18, 19) disposés sur l'une quelconque des deux surfaces et formant des filtres optiques, permettant chacun le passage de la lumière à une longueur d'onde prédéterminée différente et réfléchissant les lumières aux autres longueurs d'onde, et un premier canal d'entrée-sortie (COM) et "n" seconds canaux d'entrée-sortie (A, B, C, D), chacun étant formé par un guide d'onde optique (3, 5, 7, 9, 11) et ayant une lentille associée (2, 4, 6, 8, 10) qui relie optiquement chaque guide d'onde optique (3, 5, 7, 9, 11) à son premier composant correspondant d'entrée-sortie (12) ou son second composant d'entrée-sortie (13,

14, 15, 16, 17, 18, 19), caractérisé en ce que chaque lentille (2, 4, 6, 8, 10) est placée à distance de son composant correspondant d'entrée-sortie (13, 14, 15, 16, 17, 18, 19) et aussi de son guide d'onde optique correspondant (3, 5, 7, 9, 11) de manière que la distance comprise entre chaque lentille et le guide d'onde optique correspondant soit la même, et en ce que les positions de chaque canal d'entrée-sortie (A, B, C, D) sont telles que la longueur du trajet optique formé entre la lentille (2) du premier canal d'entrée-sortie (COM) et la lentille associée (4, 6, 8, 10) de chaque second canal d'entrée-sortie (A, B, C, D) est en proportion inverse des longueurs d'onde prédéterminées associées au second composant correspondant d'entrée-sortie.

2. Filtre optique de dérivation selon la revendication 1, dans lequel les distances comprises entre les guides d'onde optique (5, 7, 9, 11) et les lentilles (2, 4, 6, 8, 10) sont rendues égales à une valeur moyenne des valeurs maximale et minimale des valeurs optimales des seconds canaux respectifs d'entrée-sortie (A, B, C, D).

3. Filtre optique de dérivation selon la revendication 1, dans lequel les premier et seconds canaux d'entrée-sortie (COM, A, B, C, D) comportent un support cylindrique (20) qui maintient le guide d'onde optique (23, 24) et la lentille (21) afin qu'ils soient solidaires.

4. Filtre optique de dérivation selon la revendication 2, dans lequel des trajets optiques peuvent être modifiés par ajustement de la distance correspondante entre chaque canal d'entrée-sortie (COM, A, B, C, D) et le bloc (1), si bien que la valeur moyenne peut être réglée à la valeur voulue.

**Patentansprüche**

1. Optisches Abzweigefilter zur Abzweigung oder Mischung von "n" Lichtwellenlängen, welches umfaßt: einen Block (1), welcher optisch transparent ist und zwei parallele Oberflächen hat,

eine erste Eingangs/Ausgangskomponente (12), welche die "n" gemischten Lichtwellenlängen überträgt, die an einer der beiden Oberflächen vorliegen;

zweite Eingangs/Ausgangskomponenten (13, 14, 15, 16, 17, 18, 19), die an irgendeiner der beiden Oberflächen vorgesehen sind und optische Filter bilden, die jeweils Licht einer unterschiedlichen vorbestimmten Wellenlänge durchlassen, und jeweils die anderen Wellenlängen reflektieren, und einen ersten Eingangs/Ausgangsport (COM) und "n" zweite Eingangs/Ausgangsports (A, B, C, D), die jeweils von einem optischen Wellenleiter (3, 5, 7, 9, 11) gebildet sind und eine dazugehörende Linse (2, 4, 6, 8, 10) haben, welche jeden optischen Wellenleiter (3, 5, 7, 9, 11) und seine entsprechende Eingangs/Ausgangskomponente (12) oder zweite Eingangs/Ausgangskomponente (13, 14, 15, 16, 17, 18, 19) optisch verbindet, dadurch gekennzeichnet, daß jede Linse (2, 4, 6, 8, 10) mit einem Zwischenraum zwischen ihr und der entsprechenden Eingangs/Ausgangskomponente (13, 14, 15, 16, 17, 18, 19) und auch ihrem entsprechenden optischen Wellenleiter (3, 5, 7, 9, 11) angeordnet ist, so daß eine identische Distanz zwischen jeder Linse und ihrem entsprechenden optischen Wellenleiter besteht; und daß die Positionen jedes Eingangs/Ausgangsports (A, B, C, D) so sind, daß die optische Weglänge, die zwischen der Linse (2) des ersten Eingangs/Ausgangsports (COM) und der dazugehörenden Linse (4, 6, 8, 10) jedes zweiten Eingangs/Ausgangsports (A, B, C, D) gebildet ist, in umgekehrter Proportion zu den vorbestimmten Wellenlängen steht, die den entsprechenden zweiten Eingangs/Ausgangskomponenten zugeordnet sind.

2. Optisches Abzweigefilter nach Anspruch 1, dadurch gekennzeichnet, daß die Entfernungen zwischen den optischen Wellenleitern (5, 7, 9, 11) und den Linsen (2, 4, 6, 8, 10) auf einen Mittelwert der Maximal- und Minimalwerte unter den Optimalwerten der jeweiligen zweiten Eingangs/Ausgangsports (A, B, C, D) vereinheitlicht sind.

3. Optisches Abzweigefilter nach Anspruch 1, dadurch gekennzeichnet, daß der erste und zweite Eingangs/Ausgangsport (COM, A, B, C, D) einen zylindrischen Halter (20) umfaßt, welcher einheitlich den optischen Wellenleiter (23, 24) und die Linse (21) darin hält.

4. Optisches Abzweigungsfilter nach Anspruch 2, dadurch gekennzeichnet, daß die optischen Pfade durch Abgleich der entsprechenden Entfernung zwischen jedem Eingangs/Ausgangsport (COM, A, B, C, D) und dem Block (1) verändert werden können, womit der Mittelwert auf einen gewünschten Wert festgelegt werden kann.

# FIG . 1(a)

# FIG . 2

# FIG . 1(b)

EP 0 234 369 B1

# FIG. 3

# FIG .4 (a)

EP 0 234 369 B1

# FIG.4(b)

FIG.5

## FIG. 6

## FIG. 7